# EUROPEAN PATENT APPLICATION

(11) **EP 4 572 254 A1**
(43) Date of publication of application: **18.06.2025**
(21) Application number: 22954433.3
(22) Date of filing: 10.08.2022
(51) Int. Cl.: H04L 27/00, H04W 4/06

(54) **RESOURCE CONFIGURATION METHODS AND APPARATUSES, STORAGE MEDIUM, AND TERMINAL**

(71) Applicant: Beijing Xiaomi Mobile Software Co., Ltd., Beijing 100085 (CN)
(72) Inventor: LIU, Xiaofei, Beijing 100085 (CN)
(74) Representative: Stöckeler, Ferdinand
(86) International application number: PCT/CN2022/111539
(87) International publication number: WO 2024/031458

(57) **Abstract**

Resource configuration methods and apparatuses, a storage medium, and a terminal. A method comprises: releasing or retaining inactive multicast service configuration information, and using multicast service configuration information configured by a network side device. In the present application, by releasing or retaining the inactive multicast service configuration information, the resource can be flexibly and effectively configured.

## Description

### TECHNICAL FIELD

The present invention relates to the field of communication technology, and more particularly to a method and apparatus for resource configuration, a storage medium and a terminal.

### BACKGROUND

With the development of communication technology and the increase in demand, standard establishment for the fifth-generation communication technology is becoming increasingly refined. Three states are defined in the new radio (NR), including an idle state, an inactive state, and a connected state. Multicast and broadcast service (MBS) includes a multicast service in which the same content is transmitted to a plurality of receivers. There is currently no solution for how to configure inactive state multicast services.

### SUMMARY

In order to overcome problems existing in the related art, the present invention provides a method and apparatus for resource configuration, a storage medium and a terminal.

According to a first aspect of embodiments of the present invention, a method for resource configuration is provided, and the method includes: releasing or retaining inactive state multicast service configuration information, and using multicast service configuration information configured by a network device.

According to a second aspect of embodiments of the present invention, a method for resource configuration is provided, and the method includes: configuring multicast service configuration information, and sending the multicast service configuration information to a terminal. The terminal is configured to release or retain inactive state multicast service configuration information and use the multicast service configuration information.

According to a third aspect of embodiments of the present invention, an apparatus for resource configuration is provided, and the apparatus includes: a configuring module configured to release or retain inactive state multicast service configuration information and use multicast service configuration information configured by a network device.

According to a fourth aspect of embodiments of the present invention, an apparatus for resource configuration is provided, the apparatus includes: a sending module configured to configure multicast service configuration information and send the multicast service configuration information to a terminal. The terminal is configured to release or retain inactive state multicast service configuration information and use the multicast service configuration information.

According to a fifth aspect of embodiments of the present invention, a terminal is provided, which includes: a first processor; and a first memory for storing instructions executable by the first processor. The first processor is configured to execute the executable instructions to implement the method for resource configuration according to the first aspect of the present invention.

According to a sixth aspect of embodiments of the present invention, a network device is provided, which includes: a second processor; and a second memory for storing instructions executable by the second processor. The second processor is configured to execute the executable instructions to implement the method for resource configuration according to the second aspect of the present invention.

According to a seventh aspect of embodiments of the present invention, a computer-readable storage medium is provided, which has stored thereon computer program instructions that, when executed by a processor, cause the steps of the method for resource configuration according to the first aspect or the second aspect of the present invention to be implemented.

The technical solutions provided by embodiments of the present invention may include the following beneficial effects: by releasing or retaining the inactive state multicast configuration information and using the multicast service configuration configured by the network device, embodiments of the present invention may perform multicast service data reception in the inactive state.

It is to be understood that both the foregoing general description and the following detailed description are illustrative and explanatory only and are not restrictive of the present invention.

### BRIEF DESCRIPTION OF THE DRAWINGS

The above and/or additional aspects and advantages of the present invention will become apparent and more readily appreciated from the following descriptions made on embodiments with reference to the accompanying drawings.
FIG. 1 is a schematic diagram showing switching among a radio resource control (RRC) connected state, an inactive state and an idle state.
FIG. 2 shows an application scenario to which a method for resource configuration according to some embodiments is applicable.
FIG. 3 is a flowchart showing a method for resource configuration according to some embodiments.
FIG. 4 is a flowchart showing a method for resource configuration according to some other embodiments.
FIG. 5 is a flowchart showing a method for resource configuration according to yet some other embodiments.
FIG. 6 is a flowchart showing a method for resource configuration according to yet some other embodiments.
FIG. 7 is a flowchart showing a method for resource configuration according to yet some other embodiments.
FIG. 8 shows a communication timing diagram of a method for resource configuration according to yet some other embodiments.
FIG. 9 is a flowchart showing a method for resource configuration according to yet some other embodiments.
FIG. 10 is a flowchart showing a method for resource configuration according to yet some other embodiments.
FIG. 11 shows a communication timing diagram of a method for resource configuration in which a designated signaling is an RRC resume signaling according to yet some other embodiments.
FIG. 12 shows a communication timing diagram of a method for resource configuration in which a designated signaling is an RRC reconfiguration signaling according to yet some other embodiments.
FIG. 13 shows a communication timing diagram of a method for resource configuration in which a designated signaling is an RRC release signaling with suspend configuration according to yet some other embodiments.
FIG. 14 is a flowchart showing a method for resource configuration according to some embodiments.
FIG. 15 is a block diagram showing an apparatus for resource configuration according to some embodiments.
FIG. 16 is a block diagram showing an apparatus for resource configuration according to some embodiments.
FIG. 17 is a block diagram showing a terminal according to some embodiments.
FIG. 18 is a block diagram showing a network device according to some embodiments.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. Instead, they are merely examples of apparatuses and methods consistent with some aspects of embodiments of the present invention as recited in the appended claims.

To facilitate understanding of embodiments of the present invention, some terms used in embodiments of the present invention are explained below to facilitate understanding by those skilled in the art.

### 1) Terminal

The terminal includes a device that provides voice and/or data connectivity to a user, and specifically, includes a device that provides the voice to a user, or includes a device that provides the data connectivity to a user, or includes a device that provides the voice and the data connectivity to a user. For example, the terminal may include a handheld device with a wireless connection function, or a processing device connected to a wireless modem. As a manner, the terminal may include a user equipment (UE), a wireless terminal, a mobile terminal, or a user device, etc.

### 2) Network device

The network device is also called a wireless access network device. The network device is a device that connects a terminal to a wireless network. It may include an access network device, a core network device, a service provider's device (such as a server), or the like. For example, the network device includes, but is not limited to: a transmission reception point (TRP), a base station (such as a gNB), a radio network controller (RNC), a node B (NB), a base station controller (BSC), a base transceiver station (BTS), a home evolved NodeB (HeNB), a home NodeB (HNB), a baseband unit (BBU), etc.

During a process of accessing the network device or after accessing the network device, the terminal may perform a radio resource control (RRC) establishment process with the network device. After the terminal establishes an RRC connection with the network device, an RRC state of the terminal is an RRC connected (RRC_CONNECTED) state.

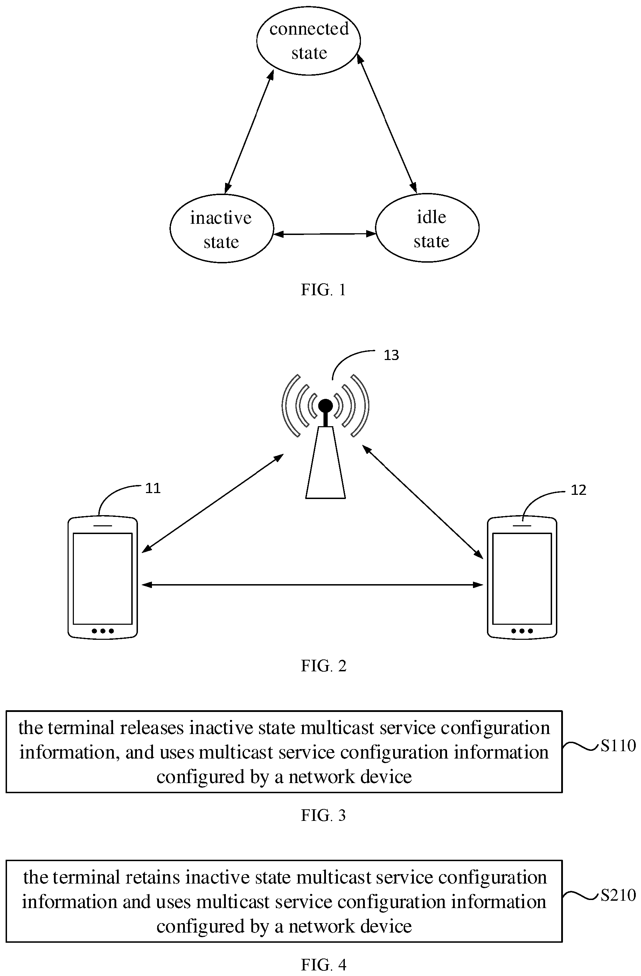

Subsequently, the RRC state of the terminal may be switched among the following states: an RRC idle state (RRC_IDLE), an RRC connected state (RRC_CONNECTED) and an RRC inactive state (RRC_INACTIVE). The state switching among RRC states may be as shown in FIG. 1. From FIG. 1, it may be seen that the RRC connected state, the RRC inactive state and the RRC idle state may be switched to each other. For example, the terminal may be switched from an inactive state to a connected state, or may be switched from an inactive state to an idle state, etc.

### 3) RRC connected state

The RRC connected state may also be referred to as a connected state for short. Herein, the "connected state" and the "RRC connected state" are the same concept and may be interchanged. A terminal and a network may perform data transmission after an RRC connection is established therebetween.

### 4) RRC idle state

The RRC idle state may also be referred to as an idle state for short. Herein, the "idle state" and the "RRC idle state" are the same concept and may be interchanged. The RRC idle state means that an RRC connection is not established between a terminal and a network device, and a connection is not established between the network device corresponding to the terminal and a core network device. In a case where the terminal is in the idle state, if there is data to be transmitted, it is necessary to first establish a connection between the terminal and the network device and a connection between the network device and the core network device before data transmission.

### 5) RRC inactive state

The RRC inactive state may also be referred to as an inactive state for short. Herein, a "de-activated state", a "deactivated state", the "inactive state", the "RRC inactive state", an "RRC deactivated state" or the like are the same concept and may be interchanged. The RRC inactive state means that an RRC connection between a terminal and a network device is disconnected, but a connection between the network device corresponding to the terminal and a core network device is not disconnected. In a case where the terminal is in the deactivated state, if there is data to be transmitted, it is necessary to first restore the RRC connection between the terminal and the network device before data transmission.

The following describes an application environment of a method for network switching according to embodiments of the present invention. As shown in FIG. 2, the application environment may include a terminal 01 and a network device 02, and the terminal 01 and the network device 02 may be connected in a wired or wireless manner.

The terminal 01 may be a user equipment (UE), a mobile station (MS), a mobile terminal (MT) or the like. Specifically, the terminal 01 may be a mobile phone, a tablet computer or a computer with a wireless transceiver function, and may also be a virtual reality (VR) terminal, an augmented reality (AR) terminal, a wireless terminal in industrial control, a wireless terminal unmanned driving, a wireless terminal in telemedicine, a wireless terminal in a smart grid, a wireless terminal in a smart city, a smart home, a car-mounted terminal, etc.

The network device 02 may include an access network device, a core network device, a service provider's device (such as a server), etc., without limitation. The network device 02 is mainly configured to implement functions such as resource scheduling, a wireless resource management, and wireless access control for the terminal 01. Specifically, the network device 02 may be any one of a small base station, a wireless access point, a transmission reception point (TRP), a transmission point (TP) and some other access nodes.

Currently, there are two sending modes for an MBS service. A first sending mode is a multicast sending mode. In the multicast sending mode, the terminal enters a connected state (RRC_CONNECTED) to receive transmission configuration information of the MBS service. Only in this way may the MBS service be received. The network device may also send reception configuration information of the MBS service to the terminal via a UE-specific signaling. A second sending mode is a broadcast sending mode. In the broadcast sending mode, the terminal may receive transmission configuration information of the MBS service and receive the MBS service in an idle state (IDLE), an inactive state (INACTIVE) or a connected state (CONNECTED). The network device may send reception configuration information of the MBS service to the terminal via system information, such as a system information block (SIB), and MBS control channel information, such as an MBS control channel (MCCH).

It can be seen that inactive multicast service reception cannot be supported in the related art. In a case where the terminal is in the inactive state, it cannot perform reception of multicast service data. In addition, in a case where the terminal enters the connected state, there is no relevant regulation on a processing manner for an inactive state multicast service configuration.

FIG. 3 is a flowchart showing a method for resource configuration according to some embodiments. As shown in FIG. 3, the method for resource configuration may be used in the terminal as shown in FIG. 2, and includes a following step.

In step S110, the terminal releases inactive state multicast service configuration information, and uses multicast service configuration information configured by a network device.

In embodiments of the present invention, the terminal may support multicast service reception in an inactive state, that is, the terminal can continue to perform the multicast service data reception in a case where it is in the inactive state. It may be seen that in the case where the terminal is in the inactive state, it may obtain an inactive state multicast service configuration and use the inactive state multicast service configuration to perform an inactive state multicast service.

As an optional manner, according to the present invention, the inactive state multicast service configuration information may be released when the resource configuration is performed, and the inactive state multicast service configuration information may be configuration information obtained when the terminal is in the inactive state.

Optionally, after the terminal releases the inactive state multicast service configuration information, it may use the multicast service configuration information configured by the network device. The multicast service configuration information configured by the network device may include at least one of: configuration information for multicast service reception in an inactive state, or configuration information for multicast service reception in a connected state. In other words, the multicast service configuration information configured by the network device may include the configuration information for multicast service reception in the inactive state, may include the configuration information for multicast service reception in the connected state, or may include the configuration information for multicast service reception in the inactive state and the configuration information for multicast service reception in the connected state.

As an optional manner, according to the present invention, after the inactive state multicast service configuration information is released, the configuration information for multicast service reception in the inactive state may be used, that is, the configuration information for multicast service reception in the inactive state transmitted by the network device is used to replace the inactive state multicast service configuration information in the terminal.

Optionally, according to the present invention, after the inactive state multicast service configuration information is released, the configuration information for multicast service reception in the connected sate may be used, that is, the configuration information for multicast service reception in the connected state transmitted by the network device is used to replace the inactive state multicast service configuration information in the terminal.

Optionally, according to the present invention, after the inactive state multicast service configuration information is released, the configuration information for multicast service reception in the inactive state and the configuration information for multicast service reception in the connected state may be used, that is, the configuration information for multicast service reception in the inactive state and the configuration information for multicast service reception in the connected state transmitted by the network device are used to replace the inactive state multicast service configuration information in the terminal. How to use the multicast service configuration information configured by the network device is no specifically restricted here and may be selected according to actual situations. For example, in a case where the terminal is in the inactive state, and in a case where it receives the configuration information for multicast service reception in the inactive state transmitted by the network device, the configuration information for multicast service reception in the inactive state transmitted by the network device may be used to replace the inactive state multicast service configuration information in the terminal.

In embodiments of the present invention, an operation of the terminal releasing the inactive state multicast service configuration information may be called a full configuration operation. When the full configuration operation is performed, the terminal may release the inactive multicast service configuration and use the multicast service configuration information configured by the network device.

Embodiments of the present invention stipulate that the processing manner for the inactive state multicast service configuration may be that the terminal releases the inactive state multicast service configuration information, and uses the multicast service configuration information configured by the network device, thereby ensuring a real-time nature of the configuration information.

FIG. 4 is a flowchart showing a method for resource configuration according to some other embodiments. As shown in FIG. 4, the method for resource configuration may be used in the terminal as shown in FIG. 2, and includes a following step.

In step S210, the terminal retains inactive state multicast service configuration information and uses multicast service configuration information configured by a network device.

As an optional manner, according to the present invention, the inactive state multicast service configuration information may be retained when the resource configuration is performed, and the inactive state multicast service configuration information may be configuration information obtained when the terminal is in the inactive state.

Optionally, after the terminal retains the inactive state multicast service configuration information, it may also use the multicast service configuration information configured by the network device. The multicast service configuration information configured by the network device may include at least one of: configuration information for multicast service reception in an inactive state, or configuration information for multicast service reception in a connected state. In other words, the multicast service configuration information configured by the network device may include the configuration information for multicast service reception in the inactive state, may include the configuration information for multicast service reception in the connected state, or may include the configuration information for multicast service reception in the inactive state and the configuration information for multicast service reception in the connected state.

As an example, according to the present invention, when the resource configuration is performed, the terminal may retain the inactive state multicast service configuration information that has been configured, and use the configuration information for multicast service reception in the connected state. The configuration information for multicast service reception in the connected state may be sent by the network device to the terminal.

As an example, according to the present invention, when the resource configuration is performed, the terminal may retain the inactive state multicast service configuration information that has been configured, and use the configuration information for multicast service reception in the inactive state. The configuration information for multicast service reception in the inactive state may be sent by the network device to the terminal.

As an example, according to the present invention, when the resource configuration is performed, the terminal may retain the inactive state multicast service configuration information that has been configured, and use the configuration information for multicast service reception in the inactive state and the configuration information for multicast service reception in the connected state. The configuration information for multicast service reception in the inactive state and the configuration information for multicast service reception in the connected state may be sent by the network device to the terminal.

In embodiments of the present invention, an operation of the terminal retaining the inactive state multicast service configuration information may be called an incremental configuration operation. In a case where the incremental configuration operation is performed, the terminal may retain the inactive multicast service configuration and use the multicast service configuration information configured by the network device.

Embodiments of the present invention stipulate that the processing manner for the inactive state multicast service configuration may be that the terminal retains the inactive state multicast service configuration information, and uses the multicast service configuration information configured by the network device. This may reduce the transmission of unnecessary signaling, thereby reducing the burden of network transmission.

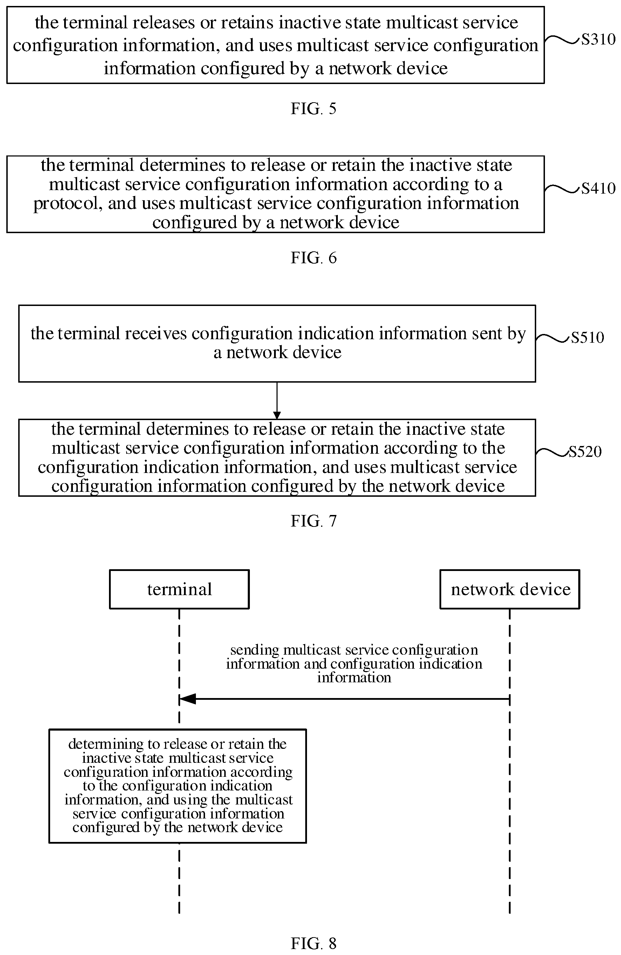

FIG. 5 is a flowchart showing a method for resource configuration according to yet some other embodiments. As shown in FIG. 5, the method for resource configuration may be used in the terminal as shown in FIG. 2, and includes a following step.

In step S310, the terminal releases or retains inactive state multicast service configuration information, and uses multicast service configuration information configured by a network device.

In embodiments of the present invention, the terminal may release the inactive state multicast service configuration information or may retain the inactive state multicast service configuration information, and use the multicast service configuration information configured by the network device. Whether the terminal releases the inactive state multicast service configuration information or retains the inactive state multicast service configuration information is not specifically restricted here and may be selected according to an actual situation. For example, the terminal may determine to release or retain the inactive state multicast service configuration information according to a protocol. For another example, the terminal may also determine to release or retain the inactive state multicast service configuration information according to an indication of the network device.

Embodiments of the present invention stipulate that the processing manner for the inactive state multicast service configuration may be that the terminal releases the inactive state multicast service configuration information or retains the inactive state multicast service configuration information, and uses the multicast service configuration information configured by the network device, thereby improving the flexibility of processing the inactive state multicast service configuration.

FIG. 6 is a flowchart of a method for resource configuration according to yet some other embodiments. As shown in FIG. 6, the method for resource configuration may be used in the terminal as shown in FIG. 2, and includes a following step.

In step S410, the terminal determines to release or retain the inactive state multicast service configuration information according to a protocol, and uses multicast service configuration information configured by a network device.

As an optional manner, the terminal may determine to release or retain the inactive state multicast service configuration information according to the protocol, and use the multicast service configuration information configured by the network device. As a specific implementation, in a case where the protocol stipulates to release the inactive state multicast service configuration information, in embodiments of the present invention, the inactive state multicast service configuration information may be released, and the multicast service configuration information configured by the network device may be used.

As another specific implementation, in a case where the protocol stipulates to retain the inactive state multicast service configuration information, in embodiments of the present invention, the inactive state multicast service configuration information may be retained, and the multicast service configuration information configured by the network device may be used.

In embodiments of the present invention, the protocol may be pre-set, and each time the terminal performs resource configuration, it may determine whether to release the inactive state multicast service configuration information or retain the inactive state multicast service configuration information according to the protocol.

Embodiments of the present invention stipulate that the terminal may determine the processing manner for the inactive state multicast service configuration according to the protocol. For different protocol provisions, respective processing manners for the inactive state multicast service configuration may also be different. This may further improve the flexibility of processing the inactive state multicast service configuration.

FIG. 7 is a flowchart showing a method for resource configuration according to yet some other embodiments. As shown in FIG. 7, the method for resource configuration may be used in the terminal as shown in FIG. 2, and includes the following steps.

In step S510, the terminal receives configuration indication information sent by a network device.

As an optional manner, the terminal may determine to release or retain the inactive state multicast service configuration information according to the configuration indication information transmitted by the network device. Specifically, the terminal may receive the configuration indication information sent by the network device, and determine to release or retain the inactive state multicast service configuration information according to the configuration indication information. The configuration indication information may be information determined by the network device based on a network state of the terminal, or based on configuration information for multicast service reception in an inactive state and configuration information for multicast service reception in a connected state.

In step S520, the terminal determines to release or retain the inactive state multicast service configuration information according to the configuration indication information, and uses multicast service configuration information configured by the network device.

In embodiments of the present invention, for different configuration indication information received by the terminal, respective processing manners for the inactive state multicast service configuration may also be different.

As an example, in a case where the configuration indication information received by the terminal from the network device is a full configuration (fullConfig) message, the terminal may release the inactive state multicast service configuration information and use the multicast service configuration information configured by the network device.

As another example, in a case where the configuration indication information received by the terminal from the network device is an incremental configuration message, the terminal may retain the inactive state multicast service configuration information and use the multicast service configuration information configured by the network device.

Embodiments of the present invention stipulate that the terminal may determine the processing manner for the inactive state multicast service configuration according to the configuration indication information transmitted by the network device. For different configuration indication information transmitted by the network device, respective processing manners for the inactive state multicast service configuration are also different. In this way, the inactive state multicast service configuration may be processed more flexibly.

FIG. 8 shows a communication timing diagram of a method for resource configuration according to yet some other embodiments. As shown in FIG. 8, the terminal may receive multicast service configuration information and configuration indication information sent by a network device. On this basis, the terminal may determine whether to release or retain the inactive state multicast service configuration information according to the configuration indication information, and use the multicast service configuration information transmitted by the network device.

It should be noted that in a case where the terminal is not only subjected to the protocol, but also receives the configuration indication information sent by the network device, and the processing manner specified by the protocol is different from the processing manner specified by the configuration indication information sent by the network device, in embodiments of the present invention, the terminal may determine to release or retain the inactive state multicast service configuration information according to the configuration indication information sent by the network side, which may improve the accuracy of the resource configuration.

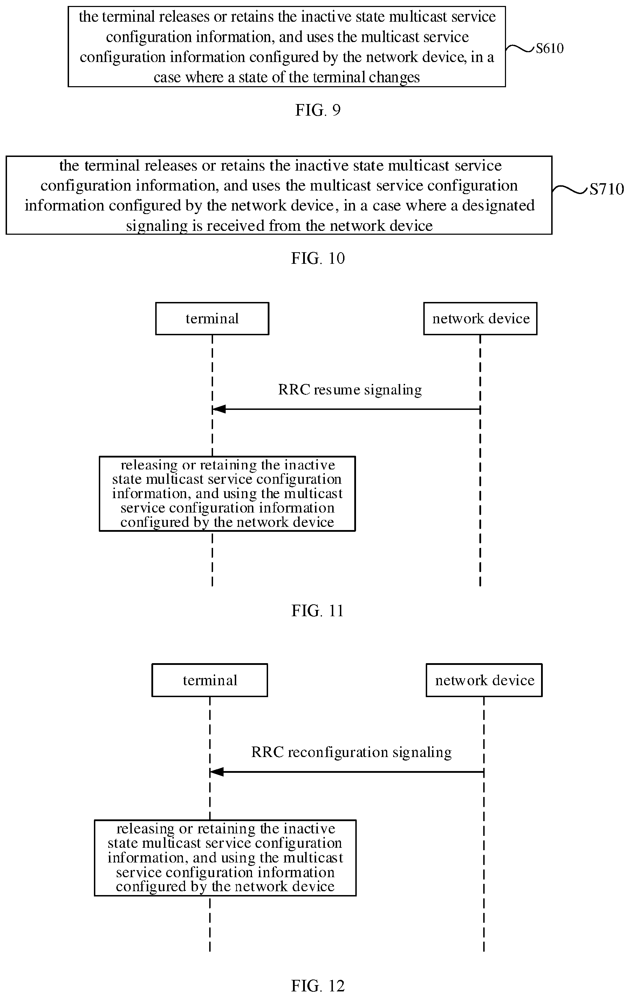

FIG. 9 is a flowchart of a method for resource configuration according to yet some other embodiments. As shown in FIG. 9, the method for resource configuration may be used in the terminal as shown in FIG. 2, and includes a following step.

In step S610, the terminal releases or retains the inactive state multicast service configuration information, and uses the multicast service configuration information configured by the network device, in a case where a state of the terminal changes.

As an optional manner, in embodiments of the present invention, in a case where it is determined that the state of the terminal is changed, the terminal may release or retain the inactive state multicast service configuration information and use the multicast service configuration information configured by the network device.

From the above introduction, it is known that the state of the terminal includes three states, which are the inactive state, the connected state and the idle state. The change in the state of the terminal may be that the terminal enters the connected state from the inactive state.

As a specific implementation, in embodiments of the present invention, in a case where the terminal enters the connected state from the inactive state, the terminal may release or retain the inactive state multicast service configuration information and use the multicast service configuration information configured by the network device.

Optionally, the change in the state of the terminal may also be that the terminal enters an inactive state from an inactive state. Specifically, when the terminal is in the inactive state, it may send a connection request to the network device. In a case where the terminal receives an RRC release signaling with suspend configuration sent by the network device, the terminal may enter an inactive state, that is, the state of the terminal changes from an inactive state to an inactive state.

As another specific implementation, in embodiments of the present invention, in a case where the terminal enters an inactive state from an inactive state, the terminal may release or retain the inactive state multicast service configuration information and use the multicast service configuration information configured by the network device.

In embodiments of the present invention, the change in the state of the terminal may also be other state change form. For example, the change in the state may be a change from the connected state to the inactive state. The specific situations for the change in the state of the terminal will not be elaborated here, and may be selected according to an actual situation.

As an optional manner, in embodiments of the present invention, in the case where the state of the terminal changes, the terminal may determine to release or retain the inactive state multicast service configuration information according to the protocol. As an example, in the case where the state of the terminal changes, if the protocol stipulates to release the inactive state multicast service configuration information, the terminal releases the inactive state multicast service configuration information.

As another optional manner, in embodiments of the present invention, in the case where the state of the terminal changes, the terminal may determine to release or retain the inactive state multicast service configuration information according to the configuration indication information sent by the network device. As an example, in the case where the state of the terminal changes, if the configuration indication information received from the network side is a full configuration, the terminal may release the inactive state multicast service configuration information.

Embodiments of the present invention stipulate that the terminal may process the inactive state multicast service configuration according to the change in the state of the terminal. That is, in embodiments of the present invention, in the case where the state of the terminal changes, the terminal may release or retain the inactive state multicast service configuration information and use the multicast service configuration information configured by the network device, which may improve the flexibility and the accuracy of the resource configuration.

FIG. 10 is a flowchart showing a method for resource configuration according to yet some other embodiments. As shown in FIG. 10, the method for resource configuration may be used in the terminal as shown in FIG. 2, and includes a following step.

In step S710, the terminal releases or retains the inactive state multicast service configuration information, and uses the multicast service configuration information configured by the network device, in a case where a designated signaling is received from the network device.

As an optional manner, in embodiments of the present invention, in a case where it is determined that the terminal has received the designated signaling transmitted by the network device, the terminal may release or retain the inactive state multicast service configuration information and use the multicast service configuration information configured by the network device.

In embodiments of the present invention, the designated signaling may include at least one of: an RRC resume signaling (RRCResume), an RRC reconfiguration signaling (RRCReconfiguration), or an RRC release signaling (RRCRelease) with suspend configuration.

As a specific implementation, in a case where the configured inactive state multicast service configuration information is carried in the suspend configuration, if the terminal receives the RRC resume signaling (RRCResume) transmitted by the network device, the inactive state multicast service configuration information may be retained, that is, the inactive state multicast service carried in the suspend configuration cannot be released.

FIG. 11 shows a communication timing diagram of a method for resource configuration in which a designated signaling is an RRC resume signaling (RRCResume) according to yet some other embodiments. As shown in FIG. 11, the terminal may receive the RRC resume signaling (RRCResume) sent by the network device. On this basis, the terminal may release or retain the inactive state multicast service configuration information, and use the multicast service configuration information configured by the network device contained in the RRC resume signaling (RRCResume).

FIG. 12 shows a communication timing diagram of a method for resource configuration in which a designated signaling is an RRC reconfiguration signaling (RRCReconfiguration) according to yet some other embodiments. As shown in FIG. 12, the terminal may receive the RRC reconfiguration signaling (RRCReconfiguration) sent by the network device. On this basis, the terminal may release or retain the inactive state multicast service configuration information, and use the multicast service configuration information configured by the network device contained in the RRC reconfiguration signaling (RRCReconfiguration).

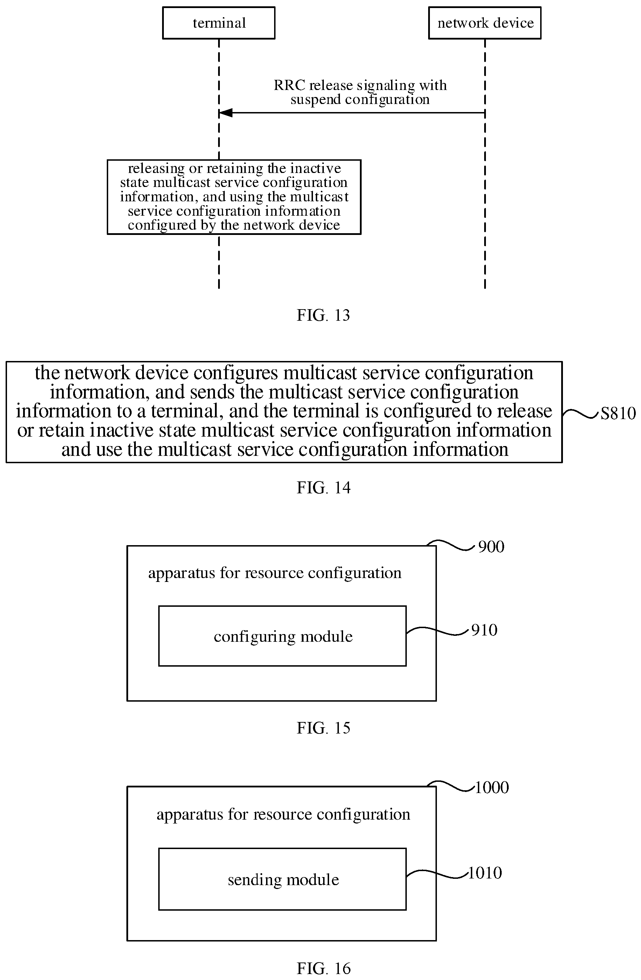

FIG. 13 shows a communication timing diagram of a method for resource configuration in which a designated signaling is an RRC release signaling (RRCRelease) with suspend configuration according to yet some other embodiments. As shown in FIG. 13, the terminal may receive the RRC release signaling (RRCRelease) with suspend configuration sent by the network device. On this basis, the terminal may release or retain the inactive state multicast service configuration information, and use the multicast service configuration information configured by the network device contained in the RRC release signaling (RRCRelease) with suspend configuration.

From the above introduction, it is known that the designated signaling may include the multicast service configuration information configured by the network device. In a case where the terminal receives the designated signaling, it may release or retain the inactive state multicast service configuration information, and may use the multicast service configuration information configured by the network device contained in the designated signaling.

As an optional manner, in a case where the terminal receives the designated signaling from the network device, according to embodiments of the present invention, the terminal may determine to release or retain the inactive state multicast service configuration information according to the protocol, and use the multicast service configuration information configured by the network device. As an example, in a case where the terminal receives the designated signaling from the network device, and the protocol stipulates to release the inactive state multicast service configuration information, according to the present invention, the terminal may release the inactive state multicast service configuration information.

As another optional manner, in a case where the terminal receives the designated signaling from the network device, according to embodiments of the present invention, the terminal may also determine to release or retain the inactive state multicast service configuration information according to the configuration indication information sent by the network device, and use the multicast service configuration information configured by the network device. As an example, in a case where the terminal receives the designated signaling from the network device, and the configuration indication information received from the network side is a full configuration, according to the present invention, the terminal may release the inactive state multicast service configuration information.

Embodiments of the present invention stipulate that the terminal may process the inactive state multicast service configuration according to the designated signaling received from the network device, that is, in a case where the terminal receives the designated signaling from the network device, according to the present invention, the terminal may release or retain the inactive state multicast service configuration information and use the multicast service configuration information configured by the network device, which may improve the flexibility and the accuracy of the resource configuration.

FIG. 14 is a flowchart showing a method for resource configuration according to some embodiments. As shown in FIG. 14, the method for resource configuration may be used in the network device as shown in FIG. 2, and includes a following step.

In step S810, the network device configures multicast service configuration information, and sends the multicast service configuration information to a terminal. The terminal is configured to release or retain inactive state multicast service configuration information and use the multicast service configuration information.

In embodiments of the present invention, the network device may configure the multicast service configuration information and send the multicast service configuration information to the terminal. The terminal may be configured to release or retain the inactive state multicast service configuration information and use the multicast service configuration information transmitted by the network device.

In addition, the multicast service configuration information configured by the network device includes at least one of: configuration information for multicast service reception in an inactive state or configuration information for multicast service reception in a connected state.

Optionally, the network device may obtain configuration indication information, and send the configuration indication information to the terminal to instruct the terminal to determine to release or retain the inactive state multicast service configuration information according to the configuration indication information. It may be seen that the configuration indication information is used to instruct the terminal to release or retain the inactive state multicast service configuration information.

Optionally, the network device may also send a designated signaling to the terminal, so that the terminal releases or retains the inactive state multicast service configuration information and uses the multicast service configuration information configured by the network device, that is, the terminal is configured to release or retain the inactive state multicast service configuration information in a case where the designated signaling is received. The designated signaling may include at least one of: an RRC resume signaling, an RRC reconfiguration signaling, or an RRC release signaling with suspend configuration.

FIG. 15 is a block diagram showing an apparatus 900 for resource configuration according to some embodiments. Referring to FIG. 15, the apparatus 900 for resource configuration is applied to a terminal, and may include a configuring module 910.

The configuring module 910 is configured to release or retain inactive state multicast service configuration information, and use multicast service configuration information configured by a network device.

In some embodiments, the multicast service configuration information configured by the network device includes at least one of: configuration information for multicast service reception in an inactive state or configuration information for multicast service reception in a connected state.

In some embodiments, the configuring module 910 may be configured to determine to release or retain the inactive state multicast service configuration information according to a protocol.

In some embodiments, the configuring module 910 may include: a receiving sub-module configured to receive configuration indication information sent by the network device; and a determining sub-module configured to determine to release or retain the inactive state multicast service configuration information according to the configuration indication information.

In some embodiments, the configuring module 910 may also be configured to release or retain the inactive state multicast service configuration information, and use the multicast service configuration information configured by the network device, in a case where a state of the terminal changes.

In some embodiments, a change in the state of the terminal includes a case where the terminal enters a connected state from an inactive state, or a case where the terminal enters an inactive state from an inactive state.

In some embodiments, the configuring module 910 may also be configured to release or retain the inactive state multicast service configuration information, and use the multicast service configuration information configured by the network device, in a case where a designated signaling is received from the network device.

In some embodiments, the designated signaling includes at least one of: an RRC resume signaling, an RRC reconfiguration signaling, or an RRC release signaling with suspend configuration.

FIG. 16 is a block diagram showing an apparatus 1000 for resource configuration according to some embodiments. Referring to FIG. 16, the apparatus 1000 for resource configuration is applied to a network device, and may include a sending module 1010.

The sending module 1010 is configured to configure multicast service configuration information, and send the multicast service configuration information to a terminal. The terminal is configured to release or retain inactive state multicast service configuration information and use the multicast service configuration information.

In some embodiments, the multicast service configuration information includes at least one of: configuration information for multicast service reception in an inactive state or configuration information for multicast service reception in a connected state.

In some embodiments, the apparatus 1000 for resource configuration may further include: a configuration indication sending module configured to send configuration indication information to the terminal to instruct the terminal to determine to release or retain the inactive state multicast service configuration information according to the configuration indication information.

In some embodiments, the apparatus 1000 for resource configuration may further include: a designated signaling sending module configured to send a designated signaling to the terminal. The terminal is configured to release or retain the inactive state multicast service configuration information and use the multicast service configuration information, in a case where the designated signaling is received.

In some embodiments, the designated signaling includes at least one of: an RRC resume signaling, an RRC reconfiguration signaling, or an RRC release signaling with suspend configuration.

With respect to the apparatuses in the above embodiments, the specific manners for performing operations for individual modules therein have been described in detail in the embodiments regarding the methods, which will not be elaborated herein.

The present invention also provides a computer-readable storage medium, which has stored thereon computer program instructions that, when executed by a processor, cause the steps of the method for resource configuration according to the present invention to be implemented.

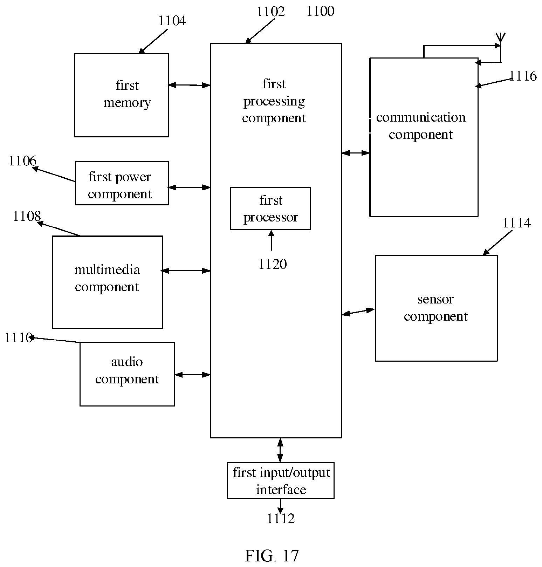

FIG. 17 is a block diagram showing a terminal according to some embodiments. For example, the terminal 1100 may be a mobile phone, a computer, a digital broadcast terminal, a messaging device, a game console, a tablet device, a medical device, a fitness device, a personal digital assistant, a smart car, or the like.

Referring to FIG. 17, the terminal 1100 may include one or more of the following components: a first processing component 1102, a first memory 1104, a first power component 1106, a multimedia component 1108, an audio component 1110, a first input/output interface 1112, a sensor component 1114, or a communication component 1116.

The first processing component 1102 typically controls overall operations of the terminal 1100, such as the operations associated with display, phone calls, data communications, camera operations, and recording operations. The first processing component 1102 may include one or more first processors 1120 to execute instructions to perform all or some of the steps in the above-described methods for resource configuration. Moreover, the first processing component 1102 may include one or more modules which facilitate the interaction between the first processing component 1102 and other components. For instance, the first processing component 1102 may include a multimedia module to facilitate the interaction between the multimedia component 1108 and the first processing component 1102.

The first memory 1104 is configured to store various types of data to support the operation of the terminal 1100. Examples of such data include instructions for any applications or methods operated on the terminal 1100, contact data, phonebook data, messages, pictures, videos, etc. The first memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The first power component 1106 provides power to various components of the terminal 1100. The first power component 1106 may include a power management system, one or more power sources, and any other components associated with the generation, management, and distribution of power in the terminal 1100.

The multimedia component 1108 includes a screen providing an output interface between the terminal 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 1108 includes a front camera and/or a rear camera. The front camera and/or the rear camera may receive an external multimedia datum while the terminal 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the terminal 1100 is in an operation mode, such as a call mode, a recording mode, and a voice recognition mode. The received audio signal may be further stored in the first memory 1104 or transmitted via the communication component 1116. In some embodiments, the audio component 1110 further includes a speaker to output audio signals.

The first input/output interface 1112 provides an interface between the first processing component 1102 and peripheral interface modules, such as keyboards, click wheels, buttons, and the like. The buttons may include, but are not limited to, a home button, a volume button, a starting button, and a locking button.

The sensor component 1114 includes one or more sensors to provide status assessments of various aspects of the terminal 1100. For instance, the sensor component 1114 may detect an open/closed status of the terminal 1100, relative positioning of components, e.g., the display and the keypad, of the terminal 1100. The sensor component 1114 may also detect a change in position of the terminal 1100 or a component of the terminal 1100, a presence or absence of user contact with the terminal 1100, an orientation or an acceleration/deceleration of the terminal 1100, and a change in temperature of the terminal 1100. The sensor component 1114 may include a proximity sensor configured to detect the presence of nearby objects without any physical contact. The sensor component 1114 may further include a light sensor, such as a CMOS or CCD image sensor, for use in imaging applications. In some embodiments, the sensor component 1114 may further include an accelerometer sensor, a gyroscope sensor, a magnetic sensor, a pressure sensor, or a temperature sensor.

The communication component 1116 is configured to facilitate communication, wired or wireless, between the terminal 1100 and other devices. The terminal 1100 can access a wireless network based on a communication standard, such as Wi-Fi, 2G, or 3G, or a combination thereof. In an illustrative embodiment, the communication component 1116 receives a broadcast signal or broadcast associated information from an external broadcast management system via a broadcast channel. In an illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 1100 may be implemented with one or more of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods for resource configuration.

In an illustrative embodiment, there is also provided a non-transitory computer readable storage medium including instructions, such as included in the first memory 1104, executable by the first processor 1120 in the terminal 1100, for completing the above-mentioned method for resource configuration. For example, the non-transitory computer-readable storage medium may be a ROM, a random access memory (RAM), a CD-ROM, a magnetic tape, a floppy disc, an optical data storage device, and the like.

In another illustrative embodiment, there is also provided a computer program product. The computer program product includes a computer program executable by a programmable device. The computer program has a code portion for executing the above method for resource configuration when executed by the programmable device.

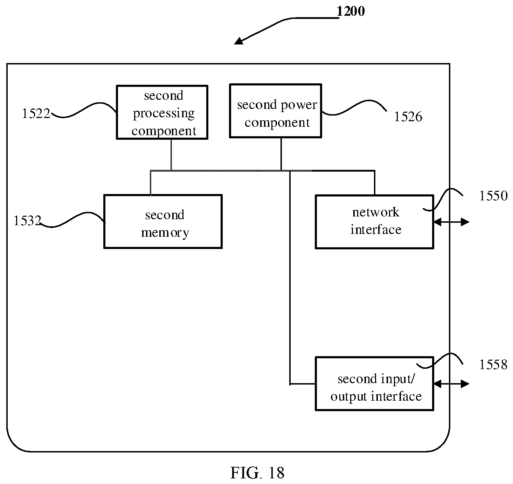

FIG. 18 is a block diagram showing a network device according to an illustrative embodiment. For example, the network device 1200 may be provided as a server. Referring to FIG. 18, the network device 1200 includes a second processing component 1222, which further includes one or more processors, and a memory resource represented by a second memory 1232 configured to store instructions executable by the second processing component 1222, such as application programs. The application programs stored in the second memory 1232 may include one or more modules each corresponding to a set of instructions. In addition, the second processing component 1222 is configured to execute instructions to perform the methods for resource configuration.

The network device 1200 may also include a second power component 1226 configured to perform the power management of the network device 1200, a wired or wireless network interfaces 1250 configured to connect the network device 1200 to a network, and a second input/output interface 1258. The network device 1200 may operate based on an operating system stored in the memory 1232, such as Windows Server^{™}, Mac OS X^{™} Unix^{™}, Linux^{™}, FreeBSD^{™}, or the like.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for resource configuration, comprising:
releasing or retaining inactive state multicast service configuration information, and using multicast service configuration information configured by a network device.

2. The method for resource configuration according to claim 1, wherein the multicast service configuration information configured by the network device comprises at least one of: configuration information for multicast service reception in an inactive state or configuration information for multicast service reception in a connected state.

3. The method for resource configuration according to claim 1, wherein releasing or retaining the inactive state multicast service configuration information comprises:
determining to release or retain the inactive state multicast service configuration information according to a protocol.

4. The method for resource configuration according to claim 1, wherein releasing or retaining the inactive state multicast service configuration information further comprises:
receiving configuration indication information sent by the network device; and
determining to release or retain the inactive state multicast service configuration information according to the configuration indication information.

5. The method for resource configuration according to claim 1, performed by a terminal, wherein releasing or retaining the inactive state multicast service configuration information and using the multicast service configuration information configured by the network device comprise:
releasing or retaining the inactive state multicast service configuration information, and using the multicast service configuration information configured by the network device, in a case where a state of the terminal changes.

6. The method for resource configuration according to claim 5, wherein a change in the state of the terminal comprises a case where the terminal enters a connected state from an inactive state, or a case where the terminal enters an inactive state from an inactive state.

7. The method for resource configuration according to claim 1, wherein releasing or retaining the inactive state multicast service configuration information and using the multicast service configuration information configured by the network device comprise:
releasing or retaining the inactive state multicast service configuration information, and using the multicast service configuration information configured by the network device, in a case that a designated signaling is received from the network device.

8. The method for resource configuration according to claim 7, wherein the designated signaling comprises at least one of: a radio resource control (RRC) resume signaling, an RRC reconfiguration signaling, or an RRC release signaling with suspend configuration.

9. A method for resource configuration, comprising:
configuring multicast service configuration information, and sending the multicast service configuration information to a terminal, wherein the terminal is configured to release or retain inactive state multicast service configuration information and use the multicast service configuration information.

10. The method for resource configuration according to claim 9, wherein the multicast service configuration information comprises at least one of: configuration information for multicast service reception in an inactive state or configuration information for multicast service reception in a connected state.

11. The method for resource configuration according to claim 9, further comprising:
sending configuration indication information to the terminal to instruct the terminal to determine to release or retain the inactive state multicast service configuration information according to the configuration indication information.

12. The method for resource configuration according to claim 9, further comprising:
sending a designated signaling to the terminal, wherein the terminal is configured to release or retain the inactive state multicast service configuration information and use the multicast service configuration information, in a case where the designated signaling is received.

13. The method for resource configuration according to claim 12, wherein the designated signaling comprises at least one of: an RRC resume signaling, an RRC reconfiguration signaling, or an RRC release signaling with suspend configuration.

14. An apparatus for resource configuration, comprising:
a configuring module configured to release or retain inactive state multicast service configuration information and use multicast service configuration information configured by a network device.

15. An apparatus for resource configuration, comprising:
a sending module configured to configure multicast service configuration information and send the multicast service configuration information to a terminal, wherein the terminal is configured to release or retain inactive state multicast service configuration information and use the multicast service configuration information.

16. A terminal, comprising:
a processor; and
a memory for storing instructions executable by the processor;
wherein the processor is configured to execute the executable instructions to implement the method for resource configuration according to any one of claims 1 to 8.

17. A network device, comprising:
a processor; and
a memory for storing instructions executable by the processor;
wherein the processor is configured to execute the executable instructions to implement the method for resource configuration according to any one of claims 9 to 13.

18. A computer-readable storage medium, having stored thereon computer program instructions that, when executed by a processing device, cause the steps of the method for resource configuration according to any one of claims 1 to 13 to be implemented.
